# EUROPEAN PATENT APPLICATION

(11) **EP 4 661 474 A1**
(43) Date of publication of application: **10.12.2025**
(21) Application number: 24756022.0
(22) Date of filing: 01.02.2024
(51) Int. Cl.: H04W 24/08

(54) **COMMUNICATION METHOD, APPARATUS AND SYSTEM**

(30) Priority: 17.02.2023 CN 202310171943
(71) Applicant: Huawei Technologies Co., Ltd., Shenzhen, Guangdong 518129 (CN)
(72) Inventor: LUO, Zhihu, Shenzhen, Guangdong 518129 (CN); JIN, Zhe, Shenzhen, Guangdong 518129 (CN); QU, Weilin, Shenzhen, Guangdong 518129 (CN); HAN, Chao, Shenzhen, Guangdong 518129 (CN)
(74) Representative: Pfenning, Meinig & Partner mbB
(86) International application number: PCT/CN2024/075338
(87) International publication number: WO 2024/169648

(57) **Abstract**

This application provides a communication method, apparatus, and system, and relates to the field of wireless communication, and in particular, to wake-up signal monitoring in a wireless communication system. A terminal device performs monitoring at a plurality of frequency domain positions when monitoring a wake-up signal, to increase a receiving rate of the wake-up signal. The method may include: receiving a first signal, where the first signal is used for time and/or frequency synchronization; and receiving first information at N frequency domain positions, where a modulation scheme of the first information is on-off keying OOK, the first information is carried in the N frequency domain positions, and N is an integer greater than 1.

## Description

This application claims priority to Chinese Patent Application No. 202310171943.X, filed with the China National Intellectual Property Administration on February 17, 2023, and entitled "COMMUNICATION METHOD, APPARATUS, AND SYSTEM", which is incorporated herein by reference in its entirety.

### TECHNICAL FIELD

Embodiments of this application relate to the communication field, and more specifically, to a communication method, apparatus, and system.

### BACKGROUND

With popularization of internet of things (Internet of things, IoT) communication, more IoT devices have been deployed in people's daily life. The most critical concern for the IoT devices is power supply. To reduce power consumption of the IoT device, a wake-up receiver may be used. In this case, a terminal device may have two receivers: a wake-up receiver and a main receiver. The wake-up receiver is capable of listening to a wake-up signal at ultra-low power consumption. After receiving the wake-up signal, the wake-up receiver may trigger wake-up of the main receiver. The main receiver may be turned off or set to deep sleep. When the main receiver is turned on, the main receiver can be used for data transmission and reception. When there is no data transmission, the main receiver of the terminal device may be in an off state, while the wake-up receiver may be in an active state or an intermittent active state, to save energy.

To reduce energy consumption, the wake-up receiver may receive only a wake-up signal with a simple modulation scheme, for example, an on-off keying (on-off keying, OOK) modulation signal. However, this limitation results in a reduced transmission rate of the wake-up signal. Therefore, how to increase the transmission rate of the wake-up signal is a problem that needs to be resolved.

### SUMMARY

This application provides a communication method, apparatus, and system. A terminal device performs monitoring at a plurality of frequency domain positions when monitoring a simple modulation signal that can be used for low power consumption monitoring, to improve a signal receiving rate.

According to a first aspect, a communication method is provided. The method may be performed by a terminal device, or may be performed by a component (for example, a chip or a circuit) of the terminal device. This is not limited in this application. For ease of description, an example in which the method is performed by the terminal device is used below for description.

The method may include: receiving a first signal, where the first signal is used for time and/or frequency synchronization; and receiving first information at N frequency domain positions, where a modulation scheme of the first information is on-off keying OOK, the first information is carried in the N frequency domain positions, and N is an integer greater than 1.

In the foregoing solution, a simple modulation signal that can be used for low power consumption monitoring is transmitted at a plurality of frequency domain positions, and a synchronization signal used to monitor the simple modulation signal is sent, so that a capacity of the simple modulation signal is increased while normal monitoring of the simple modulation signal is ensured. This allows for transmission of signals including information about a plurality of terminal devices within a shorter period of time even with a low modulation scheme, and reduces transmission latency while ensuring low-power operation of the terminal device.

In a possible design, a first frequency domain position and a second frequency domain position are noncontiguous in frequency domain, and the first frequency domain position and the second frequency domain position are two adjacent frequency domain positions in the N frequency domain positions.

In this case, a guard band is reserved between different frequency domain positions, so that the terminal device performs filtering at each frequency domain position when receiving the first signal or the first information, to ensure receiving performance.

In a possible design, the first signal is received at a third frequency domain position in the N frequency domain positions. The third frequency domain position is one of the N frequency domain positions, and a sequence corresponding to the first signal at the third frequency domain position is a first sequence.

In this solution, the synchronization signal occupies only one of the N frequency domain resources. Compared with a manner in which a synchronization signal is sent on all N frequency domain resources, network resource overheads can be reduced.

In a possible design, the frequency domain position of the third frequency domain position in the N frequency domain positions is predefined in a protocol or configured by a network device.

In a possible design, the first signal is received at P frequency domain positions in the N frequency domain positions, where P is an integer greater than 1 and less than or equal to N.

In this solution, the synchronization signal occupies a plurality of frequency resources. Compared with a manner in which one synchronization sequence is sent on only one frequency domain resource, time for obtaining synchronization can be reduced.

In a possible design, frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of monitoring the first information;
a behavior after detecting the first information;
whether the first information includes mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

A resource position occupied by the synchronization signal is used to carry information, so that dedicated signaling can be prevented from carrying the information, to reduce signaling overheads.

In a possible design, a sequence corresponding to the first signal at the P frequency domain positions is a second sequence, and the second sequence satisfies: the second sequence is equal to a bitwise negation of the first sequence.

A bitwise negation design is used for a synchronization signal that occupies one frequency resource and a synchronization signal that occupies a plurality of frequency resources, so that synchronization monitoring complexity can be reduced.

In a possible design, the first signal includes N sub-signals, the N sub-signals are respectively located at the N frequency domain positions, and one of the N sub-signals is received at each of the N frequency domain positions.

In this solution, the synchronization signal occupies N frequency resources. Compared with a manner in which one synchronization sequence is sent on only one frequency domain resource, time for obtaining synchronization can be reduced.

According to a second aspect, a communication method is provided. The method may be performed by a network device, or may be performed by a component (for example, a chip or a circuit) of the network device. This is not limited in this application. For ease of description, an example in which the method is performed by the network device is used below for description.

The method may include: sending a first signal, where the first signal is used by a terminal device to perform time and/or frequency synchronization; and sending first information at N frequency domain positions, where a modulation scheme of the first information is on-off keying OOK, the first information is carried in the N frequency domain positions, and N is an integer greater than 1.

In the foregoing solution, a simple modulation signal that can be used for low power consumption monitoring is transmitted at a plurality of frequency domain positions, and a synchronization signal used to monitor the simple modulation signal is sent, so that a capacity of the simple modulation signal is increased while normal monitoring of the simple modulation signal is ensured. This allows for transmission of signals including information about a plurality of terminal devices within a shorter period of time even with a low modulation scheme, and reduces transmission latency while ensuring low-power operation of the terminal device.

In a possible design, a first frequency domain position and a second frequency domain position are noncontiguous in frequency domain, and the first frequency domain position and the second frequency domain position are two adjacent frequency domain positions in the N frequency domain positions.

In this case, a guard band is reserved between different frequency domain positions, so that the terminal device performs filtering at each frequency domain position when receiving the first signal or the first information, to ensure receiving performance.

In a possible design, the first signal is sent at a third frequency domain position in the N frequency domain positions. The third frequency domain position is one of the N frequency domain positions, and a sequence corresponding to the first signal at the third frequency domain position is a first sequence.

In this solution, the synchronization signal occupies only one of the N frequency domain resources. Compared with a manner in which a synchronization signal is sent on all N frequency domain resources, network resource overheads can be reduced.

In a possible design, the frequency domain position of the third frequency domain position in the N frequency domain positions is predefined in a protocol or configured by the network device.

In a possible design, the first signal is sent at P frequency domain positions in the N frequency domain positions, where P is an integer greater than 1 and less than or equal to N.

In this solution, the synchronization signal occupies a plurality of frequency resources. Compared with a manner in which one synchronization sequence is sent on only one frequency domain resource, time for obtaining synchronization can be reduced.

In a possible design, frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of sending the first information;
a behavior after sending the first information;
whether the first information includes mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

A resource position occupied by the synchronization signal is used to carry information, so that dedicated signaling can be prevented from carrying the information, to reduce signaling overheads.

In a possible design, a sequence corresponding to the first signal at the P frequency domain positions is a second sequence, and the second sequence satisfies: the second sequence is equal to a bitwise negation of the first sequence.

A bitwise negation design is used for a synchronization signal that occupies one frequency resource and a synchronization signal that occupies a plurality of frequency resources, so that synchronization monitoring complexity can be reduced.

In a possible design, the first signal includes N sub-signals, the N sub-signals are respectively located at the N frequency domain positions, and one of the N sub-signals is sent at each of the N frequency domain positions.

In this solution, the synchronization signal occupies N frequency resources. Compared with a manner in which one synchronization sequence is sent on only one frequency domain resource, time for obtaining synchronization can be reduced.

According to a third aspect, a communication method is provided. The method may be performed by a terminal device, or may be performed by a component (for example, a chip or a circuit) of the terminal device. This is not limited in this application. For ease of description, an example in which the method is performed by the terminal device is used below for description.

The method may include: receiving first indication information, and determining, based on the first indication information, whether the first information carries MT-SDT indication information, where the first information indicates to enter a first state.

The foregoing solution, by carrying the MT-SDT indication information in the first information, avoids the terminal device entering a connected state to receive a downlink message, which can further reduce latency and power consumption.

In a possible design, the first indication information indicates whether the first information carries the MT-SDT indication information.

In a possible design, the first indication information indicates a terminal device identifier length included in the first information. If the terminal device identifier length is greater than a preset value, the first information carries the MT-SDT indication information; or if the terminal device identifier length is less than or equal to a preset value, the first information does not carry the MT-SDT indication information.

Indication is performed in an implicit manner, to reduce signaling overheads.

In a possible design, the first indication information indicates a behavior of the terminal device after receiving the first information. If the behavior of the terminal device after receiving the first information is performing random access, the first information carries the MT-SDT indication information; or if the behavior of the terminal device after receiving the first information is monitoring a paging occasion, the first information does not carry the MT-SDT indication information.

Indication is performed in an implicit manner, to reduce signaling overheads.

According to a fourth aspect, a communication method is provided. The method may be performed by a network device, or may be performed by a component (for example, a chip or a circuit) of the network device. This is not limited in this application. For ease of description, an example in which the method is performed by the network device is used below for description.

The method may include: generating first indication information, so that a terminal device can determine, based on the first indication information, whether first information carries MT-SDT indication information; and sending the first indication information, where the first information indicates the terminal device to enter a first state.

The foregoing solution, by carrying the MT-SDT indication information in the first information, avoids the terminal device entering a connected state to receive a downlink message, which can further reduce latency and power consumption.

In a possible design, the first indication information indicates whether the first information carries the MT-SDT indication information.

In a possible design, the first indication information indicates a terminal device identifier length included in the first information. If the terminal device identifier length is greater than a preset value, the first information carries the MT-SDT indication information; or if the terminal device identifier length is less than or equal to a preset value, the first information does not carry the MT-SDT indication information.

Indication is performed in an implicit manner, to reduce signaling overheads.

In a possible design, the first indication information indicates a behavior of the terminal device after receiving the first information. If the behavior of the terminal device after receiving the first information is performing random access, the first information carries the MT-SDT indication information; or if the behavior of the terminal device after receiving the first information is monitoring a paging occasion, the first information does not carry the MT-SDT indication information.

Indication is performed in an implicit manner, to reduce signaling overheads.

According to a fifth aspect, a communication method is provided. The method may be performed by a terminal device, or may be performed by a component (for example, a chip or a circuit) of the terminal device. This is not limited in this application. For ease of description, an example in which the method is performed by the terminal device is used below for description.

The method may include: receiving a first signal and first information, where the first signal is used for time and/or frequency synchronization, and a modulation scheme of the first information is on-off keying OOK.

Power consumption of the terminal device is reduced by receiving an OOK signal, and it is ensured, by receiving a synchronization signal, that the terminal device normally receives the OOK signal at low power consumption.

In a possible design, a first symbol quantity is the same as a second symbol quantity. The first symbol quantity is a quantity of OOK modulation symbols included in the first signal in one OFDM symbol, and the second symbol quantity is a quantity of OOK modulation symbols included in the first information in one OFDM symbol.

In this way, it can be ensured that a waveform of the synchronization signal is the same as that of a data signal, and timing synchronization precision of the synchronization signal is consistent with that of the data signal.

In a possible design, first symbol duration is the same as second symbol duration. The first symbol duration is duration occupied by one OOK modulation symbol included in the first signal in one OFDM symbol, and the second symbol duration is duration occupied by one OOK modulation symbol included in the first information in one OFDM symbol.

In this way, it can be ensured that a waveform of the synchronization signal is the same as that of a data signal, and timing synchronization precision of the synchronization signal is consistent with that of the data signal.

In a possible design, a sequence corresponding to the first signal is a first sequence, and a quantity of bits 0 included in the first sequence is the same as a quantity of bits 1 included in the first sequence.

In this way, a quantity of bits 0 and a quantity of bits 1 of the synchronization signal can be balanced, to ensure anti-noise performance of the synchronization signal.

In a possible design, the first sequence is the same as a sequence obtained by performing Manchester coding on the second sequence. The second sequence is a binary sequence.

In this way, a quantity of bits 0 and a quantity of bits 1 of the synchronization signal can be balanced, to ensure anti-noise performance of the synchronization signal.

In a possible design, the first signal is coded according to a first coding scheme, the first information is coded according to a second coding scheme, and the first coding scheme is different from the second coding scheme.

In this way, similarity between the synchronization signal and the data signal can be reduced, avoiding mistaken detection of data segments as synchronization signals.

In a possible design, the first coding scheme is that a bit 1 is coded as [1 0], and a bit 0 is coded as [0 1]; and the second coding scheme is that a bit 1 is coded as [0 1], and a bit 0 is coded as [1 0].

In this way, similarity between the synchronization signal and the data signal can be reduced, avoiding mistaken detection of data segments as synchronization signals.

In a possible design, if bandwidth occupied by the first information exceeds a first threshold, the first information is received at N frequency domain positions; or if bandwidth occupied by the first information is less than or equal to a first threshold, the first information is received at one frequency domain position.

A quantity of frequency domain positions needed for transmission of the first information is adaptively determined based on a data bandwidth size, to flexibly meet requirements for power consumption and a rate. For example, when transmission of the first information is performed at one frequency domain position, a receive side needs to use only one filtering channel to receive the first information. Power consumption is low, but a supported rate is limited. When transmission of the first information is performed at a plurality of frequency positions, the receive side needs a plurality of filtering channels to receive the first information. Power consumption is high, but a higher rate can be supported.

In a possible design, if a data rate of the first information exceeds a second threshold, the first information is received at N frequency domain positions; or if a data rate of the first information is less than or equal to a second threshold, the first information is received at one frequency domain position.

A quantity of frequency domain positions needed for transmission of the first information is adaptively determined based on a data rate value, to flexibly meet requirements for power consumption and a rate. For example, when the data rate is low, the receive side needs only one filtering channel. Power consumption is low. When the data rate is high, the receive side needs a plurality of filtering channels to receive the first information. Power consumption is higher.

In a possible design, if a sampling rate of the first information is less than or equal to a third threshold, a sequence corresponding to an ON symbol used to carry the first information is an all-1 sequence or a binary phase shift keying BPSK sequence; or if a sampling rate of the first information is greater than a third threshold, a sequence corresponding to an ON symbol used to carry the first information is a Zadoff-Chu sequence.

When the data sampling rate is low, a time domain waveform corresponding to the ON symbol is flat. This may ensure demodulation performance. When the data sampling rate is high, time domain waveform flatness corresponding to the ON symbol may be relaxed, and the Zadoff-Chu sequence is used. Power of frequency domain subcarrier is more balanced. This helps resist impact of a fading channel.

In a possible design, first capability information is sent. The first capability information indicates a supported sampling rate.

In this way, a network device learns of the capability information of the terminal device.

According to a sixth aspect, a communication method is provided. The method may be performed by a network device, or may be performed by a component (for example, a chip or a circuit) of the network device. This is not limited in this application. For ease of description, an example in which the method is performed by the network device is used below for description.

The method may include: sending a first signal and first information, where the first signal is used by a terminal device to perform time and/or frequency synchronization, and a modulation scheme of the first information is on-off keying OOK.

Power consumption of the terminal device is reduced by sending an OOK signal, and it is ensured, by sending a synchronization signal, that the terminal device normally receives the OOK signal at low power consumption.

In a possible design, a first symbol quantity is the same as a second symbol quantity. The first symbol quantity is a quantity of OOK modulation symbols included in the first signal in one OFDM symbol, and the second symbol quantity is a quantity of OOK modulation symbols included in the first information in one OFDM symbol.

In this way, it can be ensured that a waveform of the synchronization signal is the same as that of a data signal, and timing synchronization precision of the synchronization signal is consistent with that of the data signal.

In a possible design, first symbol duration is the same as second symbol duration. The first symbol duration is duration occupied by one OOK modulation symbol included in the first signal in one OFDM symbol, and the second symbol duration is duration occupied by one OOK modulation symbol included in the first information in one OFDM symbol.

In this way, it can be ensured that a waveform of the synchronization signal is the same as that of a data signal, and timing synchronization precision of the synchronization signal is consistent with that of the data signal.

In a possible design, a sequence corresponding to the first signal is a first sequence, and a quantity of bits 0 included in the first sequence is the same as a quantity of bits 1 included in the first sequence.

In this way, a quantity of bits 0 and a quantity of bits 1 of the synchronization signal can be balanced, to ensure anti-noise performance of the synchronization signal.

In a possible design, the first sequence is the same as a sequence obtained by performing Manchester coding on the second sequence. The second sequence is a binary sequence.

In this way, a quantity of bits 0 and a quantity of bits 1 of the synchronization signal can be balanced, to ensure anti-noise performance of the synchronization signal.

In a possible design, the first signal is coded according to a first coding scheme, the first information is coded according to a second coding scheme, and the first coding scheme is different from the second coding scheme.

In this way, similarity between the synchronization signal and the data signal can be reduced, avoiding mistaken detection of data segments as synchronization signals.

In a possible design, the first coding scheme is that a bit 1 is coded as [1 0], and a bit 0 is coded as [0 1]; and the second coding scheme is that a bit 1 is coded as [0 1], and a bit 0 is coded as [1 0].

In this way, similarity between the synchronization signal and the data signal can be reduced, avoiding mistaken detection of data segments as synchronization signals.

In a possible design, if bandwidth occupied by the first information exceeds a first threshold, the first information is sent at N frequency domain positions; or if bandwidth occupied by the first information is less than or equal to a first threshold, the first information is sent at one frequency domain position.

A quantity of frequency domain positions needed for transmission of the first information is adaptively determined based on a data bandwidth size, to flexibly meet requirements for power consumption and a rate. For example, when transmission of the first information is performed at one frequency domain position, a receive side needs to use only one filtering channel to receive the first information. Power consumption is low, but a supported rate is limited. When transmission of the first information is performed at a plurality of frequency positions, the receive side needs a plurality of filtering channels to receive the first information. Power consumption is high, but a higher rate can be supported.

In a possible design, if a data rate of the first information exceeds a second threshold, the first information is sent at N frequency domain positions; or if a data rate of the first information is less than or equal to a second threshold, the first information is sent at one frequency domain position.

A quantity of frequency domain positions needed for transmission of the first information is adaptively determined based on a data rate value, to flexibly meet requirements for power consumption and a rate. For example, when the data rate is low, the receive side needs only one filtering channel. Power consumption is low. When the data rate is high, the receive side needs a plurality of filtering channels to receive the first information. Power consumption is higher.

In a possible design, if a sampling rate of the first information is less than or equal to a third threshold, a sequence corresponding to an ON symbol used to carry the first information is an all-1 sequence or a binary phase shift keying BPSK sequence; or if a sampling rate of the first information is greater than a third threshold, a sequence corresponding to an ON symbol used to carry the first information is a Zadoff-Chu sequence.

When the data sampling rate is low, a time domain waveform corresponding to the ON symbol is flat. This may ensure demodulation performance. When the data sampling rate is high, time domain waveform flatness corresponding to the ON symbol may be relaxed, and the Zadoff-Chu sequence is used. Power of frequency domain subcarrier is more balanced. This helps resist impact of a fading channel.

In a possible design, first capability information is received. The first capability information indicates a sampling rate supported by the terminal device.

In this way, the network device learns of the capability information of the terminal device.

Correspondingly, this application further provides a communication device. The device may implement the communication method according to any one of the first aspect to the sixth aspect. For example, the device may be a terminal device or a network device, or may be another device that can implement the foregoing communication method. The device may implement the foregoing method by using software, hardware, or hardware executing corresponding software.

In a possible design, the device may include a processor and a memory. The processor is configured to support the device in performing a corresponding function in the method according to any one of the foregoing aspects. The memory is configured to: be coupled to the processor, and store program instructions and data that are necessary for the device. In addition, the device may further include a communication interface configured to support communication between the device and another device. The communication interface may be a transceiver or a transceiver circuit.

According to still another aspect, an embodiment of this application provides a communication system. The system includes the communication device according to the foregoing aspects.

Still another aspect of this application provides a computer-readable storage medium. The computer-readable storage medium stores instructions. When the instructions are run on a computer, the computer is caused to perform the method according to the foregoing aspects.

Still another aspect of this application provides a computer program product including instructions. When the computer program product runs on a computer, the computer is caused to perform the method according to the foregoing aspects.

This application further provides a chip system. The chip system includes a processor, and may further include a memory, to implement the method according to any one of the foregoing aspects.

Any device, computer storage medium, computer program product, chip system, or communication system provided above is configured to perform a corresponding method provided above. Therefore, for beneficial effects that can be achieved by the device, computer storage medium, computer program product, chip system, or communication system, refer to beneficial effects of corresponding solutions in the corresponding method provided above. Details are not described herein again.

### BRIEF DESCRIPTION OF DRAWINGS

FIG. 1 is a diagram of a network architecture according to an embodiment of this application;
FIG. 2 is a schematic working diagram of a wake-up receiver according to an embodiment of this application;
FIG. 3 is a diagram of ASK modulation according to an embodiment of this application;
FIG. 4 is a diagram of an OFDM-compatible OOK waveform according to an embodiment of this application;
FIG. 5 is a diagram of interaction of a communication method according to an embodiment of this application;
FIG. 6 is a diagram of signal transmission according to an embodiment of this application;
FIG. 7 is a diagram of another type of signal transmission according to an embodiment of this application;
FIG. 8 is a diagram of still another type of signal transmission according to an embodiment of this application;
FIG. 9 is a diagram of still another type of signal transmission according to an embodiment of this application;
FIG. 10 is a diagram of interaction of another communication method according to an embodiment of this application;
FIG. 11 is a diagram of interaction of still another communication method according to an embodiment of this application;
FIG. 12 is a diagram of a communication apparatus according to an embodiment of this application;
FIG. 13 is a diagram of another communication apparatus according to an embodiment of this application;
FIG. 14 is a diagram of still another communication apparatus according to an embodiment of this application; and
FIG. 15 is a diagram of a communication system according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th Generation, 5G) mobile communication system or a new radio (new radio, NR) system. The 5G mobile communication system may be non-standalone (non-standalone, NSA) networking or standalone (standalone, SA) networking.

The technical solutions provided in this application may be further applied to machine type communication (machine type communication, MTC), a long term evolution technology for machine-to-machine communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to vehicle, V2P), vehicle to network (vehicle to network, V2N) communication, or the like.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, self driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. Neither of a specific technology and a specific device form used for the terminal is limited in embodiments of this application.

The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a home appliance like a television, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that dedicated to only one type of application function and need to work with other devices such as smartphones, for example, various smart bands or smart jewelry for monitoring physical signs.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In embodiments of this application, the terminal device may alternatively be a vehicle or an entire vehicle, and may implement communication via the internet of vehicles, or may be a part located in the vehicle (for example, placed in the vehicle or mounted in the vehicle), namely, an on-board terminal device, an on-board module, or an on-board unit (on-board unit, OBU).

In addition, the terminal device may further include a sensor such as an intelligent printer, a train detector, and a gas station. Main functions include collecting data (some terminal devices), receiving control information and downlink data from a network device, sending an electromagnetic wave, and transmitting uplink data to the network device.

In embodiments of this application, the network device may be any device having a wireless transceiver function. The device includes, but is not limited to: a base station (base station), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the device may be a next generation NodeB (next generation NodeB, gNB) or a transmission point (a TRP or a TP) in a 5G (for example, NR) system, one or one group of antenna panels (including a plurality of antenna panels) of a base station in the 5G system, or may be a network node included in the gNB or the transmission point, for example, a baseband unit (baseband unit, BBU) or a distributed unit (distributed unit, DU), or a base station in a next generation 6G communication system.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and low transmit power, and are applicable to providing a high-rate data transmission service.

A network architecture to which an embodiment of this application is applicable is described below by using an example.

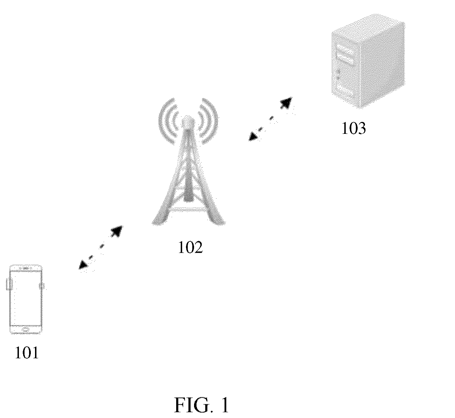

FIG. 1 is a diagram of a network architecture according to an embodiment of this application. As shown in FIG. 1, the network architecture may include a terminal device 101, a network device 102, and a core network device 103. The terminal device 101 may be connected to the network device 102 in a wireless manner, and may access the core network device 103 via the network device 102. The terminal device 101 may be fixed or mobile.

It should be noted that quantities and types of network devices, terminal devices, and core network devices included in the network architecture shown in FIG. 1 are merely an example. Embodiments of this application are not limited thereto. For example, there may be more or fewer terminal devices that communicate with the network device. For example, there may be more or fewer core network devices that communicate with the network device. For brevity of description, details are not described in the accompanying drawings. In addition, in the network architecture shown in FIG. 1, although the network device, the terminal device, and the core network device are shown, the application scenario may include but is not limited to the network device, the terminal device, and the core network device. For example, the application scenario may further include a device configured to bear a virtualized network function. This is clear to a person skilled in the art. Details are not described.

The following first provides definitions of technical terms that may occur in embodiments of this application. Terms used in implementations of this application are used to only explain specific embodiments of this application, but are not intended to limit this application.

### 1. Main receiver (main radio)

Usually, a same receiving module (or a receiver or a receiving circuit) is used for implementation when the terminal device performs a paging receiving procedure in an idle state or an inactive state and when the terminal device receives data in a connected state. In this application, for ease of description, a module that completes these functions (or performs related steps) is referred to as a main receiver. It can be understood that the main receiver is merely a name for distinguishing, and a specific name of the main receiver does not constitute any limitation on the protection scope of this application.

The main receiver has high power consumption, but has more functions, and can receive and send more types of signals. In a process of communicating with the network device, the main receiver is configured to undertake main data transmission.

In this application, the main receiver may be configured to receive a synchronization signal block (synchronization signal block, SSB), a physical downlink control channel (physical downlink control channel, PDCCH), a physical downlink shared channel (physical downlink shared channel, PDSCH), or a channel state information reference signal (channel state reference signal, CSI-RS), or may be configured to receive a binary phase shift keying (binary phase shift keying, BPSK), quadrature phase shift keying (quadrature phase shift keying, QPSK), 16 quadrature amplitude modulation (quadrature amplitude modulation, QAM), 64QAM, or 256QAM modulation signal, or may be configured to receive a fast Fourier transform (fast Fourier transform, FFT) signal or an inverse fast Fourier transform (inverse fast Fourier transform, IFFT) signal. The main receiver may be a receiver whose local oscillator has high precision.

When the terminal device receives paging via the main receiver, power consumption is high. For example, the terminal device needs to periodically wake up the main receiver once every each discontinuous reception (discontinuous reception, DRX) cycle. When the terminal device does not perform transmission of signaling or a data service, a behavior of waking up the main receiver once in each DRX cycle causes main power consumption of the terminal device.

### 2. Wake-up receiver (wake-up receiver, WUR)

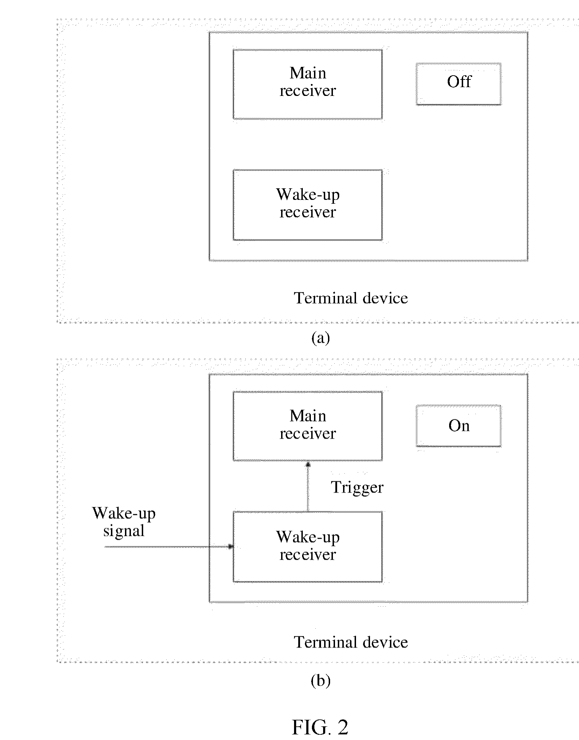

If the terminal device can be woken up only when being triggered, power consumption can be greatly reduced. For example, the terminal device is woken up only when being paged by the network device, instead of being woken up once in each DRX cycle regardless of whether the terminal device is paged. This mechanism is implemented by using two receivers. One is a main receiver, and the other is a wake-up receiver. After receiving a wake-up signal, the wake-up receiver may trigger wake-up of the main receiver. The main receiver may be turned off or set to deep sleep. When the main receiver is turned on, the main receiver may be used for data transmission and reception. For a terminal device configured with a wake-up receiver module, when the network device has no data to be sent to the terminal device and the terminal device has no data to be transmitted, the main receiver of the terminal device may be in an off state, and the wake-up receiver may be in an active state or an intermittent active state, to save energy of the terminal device. FIG. 2 is a diagram of the wake-up receiver. For example, if the wake-up receiver does not receive a wake-up signal for waking up the terminal device, the wake-up receiver does not trigger the main receiver, and the main receiver is in an off state or a deep sleep state, as shown in FIG. 2 (a). If the wake-up receiver receives a wake-up signal for waking up the terminal device, the wake-up receiver wakes up the main receiver, so that the main receiver is in an on state, as shown in FIG. 2 (b).

In this application, the wake-up receiver is capable of monitoring a wake-up signal (wake-up signal, WUS) at ultra-low power consumption. After receiving the wake-up signal, the wake-up receiver may trigger the main receiver to wake up. For example, the wake-up receiver is a receiver that can receive a signal modulated through on-off keying (on-off keying, OOK) or frequency shift keying (frequency shift keying, FSK), or the wake-up receiver is a receiver that can receive a signal that does not use fast Fourier transform (fast Fourier transform, FFT) or inverse fast Fourier transform (inverse fast Fourier transform, IFFT) in a generation or decoding process, or the wake-up receiver is a receiver that can receive a signal on which Manchester coding is performed. The "wake-up receiver" may alternatively be described as a "low power wake-up receiver", a wake-up radio (wake-up radio), a "secondary receiver", or a "wake-up circuit".

The wake-up receiver consumes less energy than the main receiver. For example, energy consumption of a signal transmitted on a link used by the wake-up receiver to receive the wake-up signal is lower than energy consumption of a signal that is transmitted on a main link and that is received by the main receiver. For another example, compared with the main receiver, the wake-up receiver consumes less energy. For another example, the wake-up receiver is a receiver whose local oscillator has low precision. For another example, the wake-up receiver is a receiver that performs envelope detection. These manners facilitate implementation of low power consumption of the wake-up receiver.

### 3. Wake-up signal

In this application, a signal monitored by the wake-up receiver is referred to as a "wake-up signal", a "signal transmitted on a wake-up link", a "WUR signal", or the like. The wake-up signal may be a signal obtained through OOK modulation, FSK modulation, or sequence modulation. The wake-up signal may be generated in all the three manners with reference to an existing orthogonal frequency division multiplexing (orthogonal frequency division multiplexing, OFDM) waveform in NR. The wake-up signal may alternatively be a signal that does not use FFT or IFFT in a generation or decoding process, or may be a signal that uses Manchester coding.

When the OOK modulation is used, each bit (where the bit may be a coded bit) corresponds to one symbol (which may also be referred to as one chip (chip)). When the bit is 1, a signal is sent within duration of the symbol (that is, signal power is not 0 within the duration of the symbol). When the bit is 0, no signal is sent within the duration of the symbol (that is, the signal power is 0 within the duration of the symbol). It should be understood that, the opposite case can also apply. To be specific, when the bit is 0, a signal is sent within the duration of the symbol (that is, the signal power is not 0 within the duration of the symbol). When the bit is 1, no signal is sent within the duration of the symbol (that is, the signal power is 0 within the duration of the symbol). This is not limited in this application.

In addition to the wake-up signal, the signal transmitted by the network device on the wake-up link may further include a synchronization signal. The synchronization signal may be used for time synchronization of the wake-up link, and may be further used by the terminal device to monitor quality of the wake-up link.

### 4. ASK modulation

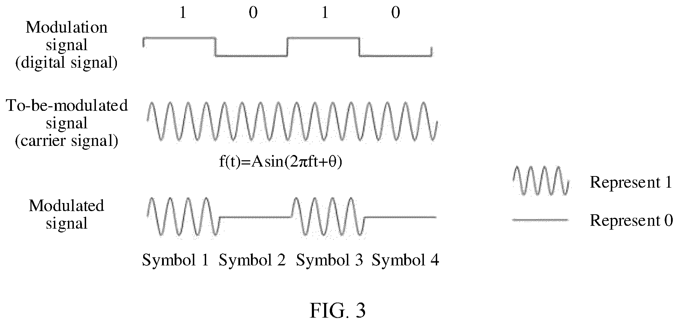

In an ASK (amplitude-shift keying, amplitude-shift keying) modulation scheme, an amplitude of a carrier is adjusted based on a value of a digital signal, and a frequency and a phase of the carrier remain unchanged. As shown in FIG. 3, a transmitted digital signal is in a binary form including 0 and 1. Compared with a carrier signal, for a modulated signal, an amplitude signal is transmitted when a bit is 1 (a carrier amplitude remains unchanged), and another amplitude signal is transmitted when the bit is 0 (the amplitude changes to 0). It is clear that in the ASK modulation scheme, 1-bit data is modulated into one symbol. A modulated signal corresponds to two types of symbol waveforms, for transmission of only two types of data: 0 and 1. 2ASK may also be referred to as OOK.

### 5. OFDM-compatible OOK waveform

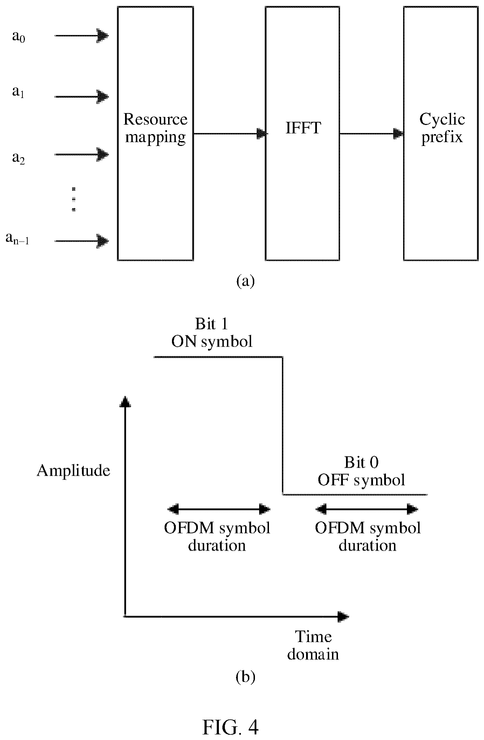

For OOK modulation, an example of an OFDM-compatible waveform generation method is shown in FIG. 4. FIG. 4(a) is an OFDM generation block diagram, and FIG. 4(b) is a diagram of a time domain waveform. When a bit that needs to be transmitted is 1, an amplitude of a frequency domain sequence *aᵢ* is a non-all-zero value. After the OFDM generation block diagram is performed, an ON (ON) symbol may be obtained in time domain, and the ON symbol has a large amplitude value. When the to-be-transmitted bit is 0, the amplitude of the frequency domain sequence *aᵢ* may be an all-zero value or a small value. After the OFDM generation block diagram is performed, an OFF (OFF) symbol may be obtained in time domain, and the OFF symbol has a small amplitude value. In this manner, only 1 bit can be carried in one OFDM symbol. In this case, a transmission rate is limited. For example, in a typical NR deployment scenario, a subcarrier spacing is 15 kHz, and a supported rate is 14 Kbps; and a subcarrier spacing is 30 kHz, and a supported rate is 28 Kbps.

According to the foregoing manner, a capacity supported by the wake-up signal is limited. In this case, one wake-up signal may carry small amount of wake-up information. When there are a large quantity of terminal devices that need to be woken up in a cell, a large wake-up latency is caused, affecting application of the wake-up receiver.

To resolve the foregoing problem, an embodiment of this application provides a communication method. According to the method, wake-up information can be transmitted in a plurality of frequency domains, to increase a wake-up signal transmission rate and reduce a wake-up delay.

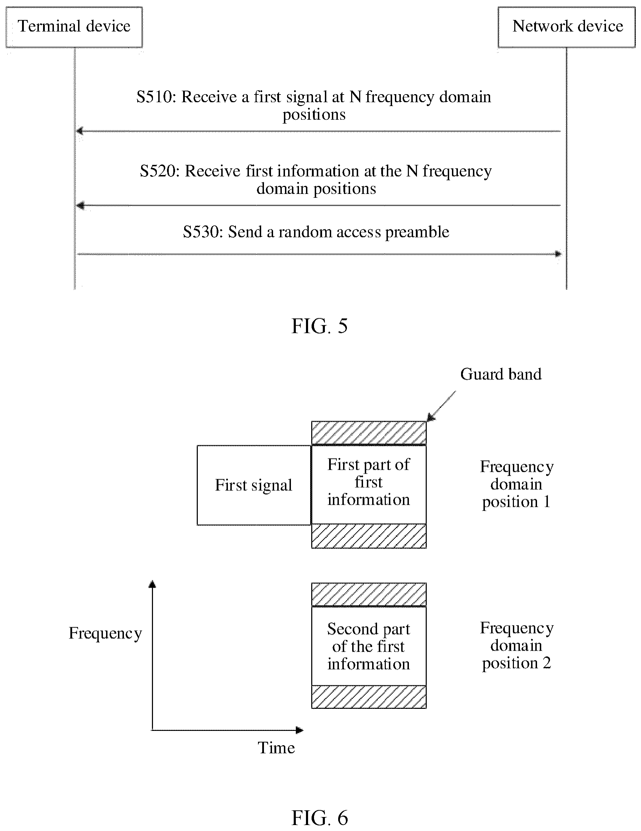

FIG. 5 is a diagram of an example of a communication method according to an embodiment of this application. The method may be performed by a terminal device and a network device, or may be performed by a chip in the terminal device and a chip in the network device. It should be understood that FIG. 5 shows steps or operations of the communication method. However, these steps or operations are merely an example. In this embodiment of this application, other operations or variations of the operations in FIG. 5 may be further performed, or steps may be properly exchanged.

S510: The terminal device receives a first signal.

Correspondingly, the network device sends the first signal.

The first signal is used for time and/or frequency synchronization of the terminal device.

S520: The terminal device receives first information at N frequency domain positions.

Correspondingly, the network device sends the first information at the N frequency domain positions.

A modulation scheme of the first information is OOK, the first information is carried in the N frequency domain positions, and N is an integer greater than 1. Each of the N frequency domain positions carries a part of the first information.

In a possible implementation, the first information carries a wake-up signal. The network device wakes up the terminal device by sending the first information.

It should be understood that there is no limitation on a time sequence between steps S510 and S520. To be specific, the network device may send the first signal before, after, or when the network device sends the first information.

In a possible implementation, a first frequency domain position and a second frequency domain position are noncontiguous in frequency domain, and the first frequency domain position and the second frequency domain position are two adjacent frequency domain positions in the N frequency domain positions.

The frequency domain position herein is a frequency domain position actually occupied by the first signal or the first information. When the first signal or the first information is transmitted, some frequency domain resources need to be reserved as guard bands other than the actually occupied frequency domain position. The frequency domain position herein does not include these guard bands. When receiving the first signal or the first information, the terminal device needs to perform filtering at each frequency domain position. The guard band is used to avoid out-of-band interference introduced during filtering, to ensure receiving performance.

In this application, the frequency domain position may also be equivalent to a "frequency domain resource", a "frequency resource", a "frequency position", a "frequency domain resource position", and a "frequency resource position".

S530: The terminal device sends a random access preamble.

Correspondingly, the network device receives the random access preamble.

Step S530 is an optional step.

In the foregoing solution, a wake-up signal is transmitted at a plurality of frequency domain positions, so that a capacity of the wake-up signal is increased. In this way, even if a low modulation scheme is used, a large quantity of terminal devices can be woken up within a short period of time. This ensures low power consumption of the terminal device, and reduces wake-up latency, so that the wake-up receiver can be more widely used in energy-saving scenarios.

In step S510, the network device sends the first signal, and the first signal is used by the terminal device to perform time and/or frequency synchronization, so that the terminal device can still normally receive the first information in an operating state with low power consumption. In a possible implementation, the terminal device receives the first signal at one or more of the N frequency domain positions. In this way, the terminal device does not need to receive a synchronization signal by using another frequency domain position, to reduce energy consumption of the terminal device. There may be a plurality of implementations in which the terminal device receives the first signal at the N frequency domain positions.

Implementation 1: The terminal device receives the first signal at a third frequency domain position in the N frequency domain positions. The third frequency domain position is one of the N frequency domain positions. Correspondingly, the network device sends the first signal at the third frequency domain position in the N frequency domain positions. A sequence corresponding to the first signal at the third frequency domain position is a first sequence. In this application, one signal or one piece of information corresponds to a sequence, indicating that the signal or information is generated based on the sequence. For example, as shown in FIG. 6, N is 2, the first signal occupies a frequency domain position 1 in the two frequency domain positions, the two frequency domain positions are used to carry the first information, each of the two frequency domain positions carries a part of the first information, the frequency domain position 1 carries a first part of the first information, and the frequency domain position 2 carries a second part of the first information. To ensure receiving performance of the first information or the first signal, both the frequency domain position 1 and a frequency domain position 2 have guard bands. In this solution, the synchronization signal occupies only one of the N frequency domain resources. Compared with a manner in which a synchronization signal is sent on all N frequency domain resources, network resource overheads can be reduced.

Implementation 2: Receive the first signal at P frequency domain positions in the N frequency domain positions, where P is an integer greater than 1 and less than or equal to N. Correspondingly, the network device sends the first signal at the P frequency domain positions in the N frequency domain positions. Optionally, P may alternatively be equal to 1.

In a possible implementation, a frequency domain position of the first signal in the N frequency domain positions is predefined in a protocol or configured by the network device. For example, it is agreed that the first signal is transmitted in one of the N frequency domain positions, and a relative location of the frequency domain position used for transmission of the first signal in the N frequency domain positions is agreed. For example, indexes of the N frequency domain positions are 0, 1, ..., and N-1, and it is agreed that a frequency domain position whose index is K in the N frequency domain positions is used for transmission of the first signal. For example, indexes of the N frequency domain positions are 0, 1, ..., and N-1, and the network device notifies the terminal device of a frequency domain position index of the first signal.

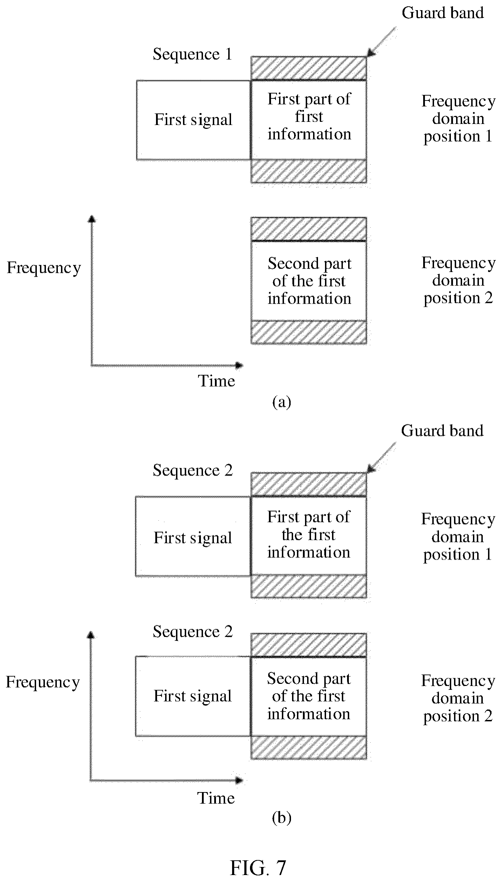

In a possible implementation, a sequence corresponding to the first signal at Q frequency domain positions is a second sequence. Q is an integer greater than 1 and less than or equal to N. A sequence corresponding to each of the Q frequency domain positions is a second sequence. The second sequence is different from a first sequence. In a possible implementation, the second sequence is equal to a bitwise negation of the first sequence. In other words, if the first signal occupies one frequency domain position in the N frequency domain positions, the sequence corresponding to the first signal is the first sequence regardless of the implementation 1 or the implementation 2. If the first signal occupies more than one frequency domain position in the N frequency domain positions, the sequence corresponding to the first signal is the second sequence. For example, as shown in FIG. 7, N is 2. In FIG. 7(a), P is 1, the first signal occupies one frequency domain position, and the corresponding sequence is a sequence 1. In FIG. 7(b), P is 2, the first signal occupies two frequency domain positions, and the corresponding sequence is a sequence 2. The sequence 1 and the sequence 2 are in a bit negation relationship. For example, the sequence 1 is [0 1 0 1 1 0 1 1 0 1 0 0 0 1 0 0 1 1 1 0 1 0 0 0 1 1 0 0 0 1 1 1] , and the sequence 2 is [1 0 1 0 0 1 0 0 1 0 1 1 1 0 1 1 0 0 0 1 0 1 1 1 0 0 1 1 1 0 0 0]. It can be learned that at a same bit position, when the bit in the sequence 1 is 1, the bit in the sequence 2 is 0; or when the bit in the sequence 1 is 0, the bit in the sequence 2 is 1. In this case, a receive side of the terminal device may locally generate only a local sequence. If the sequence corresponding to the first signal is the sequence 1, a positive correlation peak is obtained. If the sequence corresponding to the first signal is the sequence 2, a negative correlation peak is obtained. This can reduce synchronization monitoring complexity.

In this solution, the synchronization signal occupies a plurality of frequency resources. Compared with a manner in which one synchronization sequence is sent on only one frequency domain resource, time for obtaining synchronization can be reduced. A bitwise negation design is used for a synchronization signal that occupies one frequency resource and a synchronization signal that occupies a plurality of frequency resources, so that the synchronization monitoring complexity can be reduced.

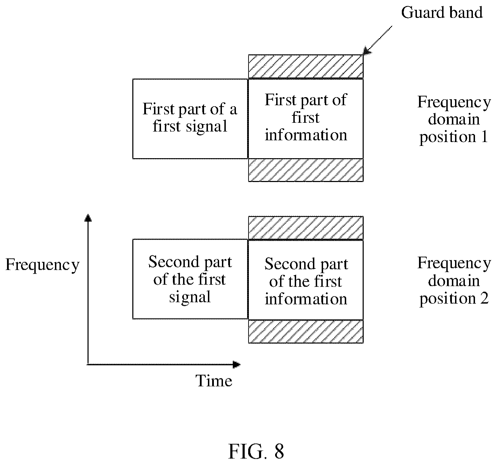

Implementation 3: The first signal includes N sub-signals, and the N sub-signals are respectively located at the N frequency domain positions. The terminal device receives one of the N sub-signals at each of the N frequency domain positions. Correspondingly, the network device sends one of the N sub-signals at each of the N frequency domain positions. For example, as shown in FIG. 8, N is 2, the first signal occupies the two frequency domain positions, a total length of a sequence corresponding to the first signal is 32 bits, and a sequence corresponding to the first signal is [0 1 0 1 1 0 1 1 0 1 0 0 0 1 0 0 1 1 1 0 1 0 0 0 1 1 0 0 0 1 1 1] . Each of the two frequency domain positions carries a part of the first signal. A frequency domain position 1 carries first 16 bits of the first signal, and a frequency domain position 2 carries last 16 bits of the first signal. In addition, the first information also occupies the two frequency domain positions, and each frequency domain position carries a part of the first information. In this solution, the synchronization signal occupies N frequency resources. Compared with a manner in which one synchronization sequence is sent on only one frequency domain resource, time for obtaining synchronization can be reduced.

In a possible implementation, in the implementation 1 and the implementation 2, the network device does not notify the frequency domain position of the first signal, and the frequency domain position occupied by the first signal may be used for transmission of some information. The terminal device determines the frequency domain position of the first signal in the N frequency domain positions through blind monitoring, to determine information additionally carried in the frequency domain position. For example, for the implementation 1, a specific frequency domain position of the first signal in the N frequency domain positions may be used to carry additional information. For example, if N is 4, in the implementation 1, a specific frequency domain position of the first signal in the four frequency domain positions may be used to carry the additional information. For example, for the implementation 2, P specific frequency domain positions of the first signal in the N frequency domain positions may be used to carry additional information. For example, if N is 4 and P is 2, in the implementation 2, two specific frequency domain positions of the first signal in the four frequency domain positions may be used to carry the additional information. For another example, for the implementation 2, a quantity P of frequency domain positions occupied by the first signal in the N frequency domain positions may be used to carry additional information. For example, if N is 4, in the implementation 2, a quantity 1, 2, 3, or 4 of frequency domain positions occupied by the first signal in the four frequency domain positions may be used to carry the additional information. For another example, as shown in FIG. 7, N is 2. If P is 1, that is, the first signal occupies one frequency domain position, information A may be carried, as shown in FIG. 7(a). If P is 2, that is, the first signal occupies two frequency domain positions, information B may be carried, as shown in FIG. 7(b). For another example, for the implementation 2, a quantity P of frequency domain positions occupied by the first signal in the N frequency domain positions and positions of the P frequency domain positions in the N frequency domain positions may be used to carry additional information. A resource position occupied by the synchronization signal is used to carry information, so that dedicated signaling can be prevented from carrying the information, to reduce signaling overheads.

The frequency domain position of the first signal in the N frequency domain positions may indicate at least one of the following information.

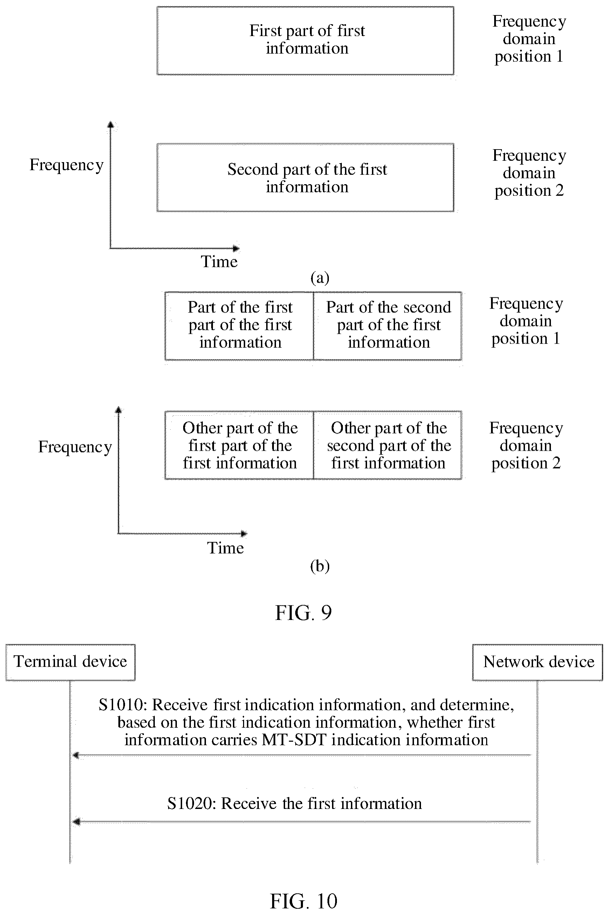

Information 1: A segmentation manner of the first information at the N frequency domain positions. In a segmentation manner 1, the first information is divided into N parts, where a first part is transmitted at a 1^{st} frequency domain position of the N frequency domain positions, and a second part is transmitted at a 2^{nd} frequency domain position of the N frequency domain positions. In a segmentation manner 2, the first information is divided into N parts, and each part is transmitted at the N frequency domain positions. As shown in FIG. 9, the first information is divided into two parts, a first part is transmitted at a frequency domain position 1, and a second part is transmitted at a frequency domain position 2, as shown in FIG. 9 (a). The first information is divided into two parts, a part of a first part and a part of a second part are transmitted at a frequency domain position 1, and the other part of the first part and the other part of the second part are transmitted at a frequency domain position 2, as shown in FIG. 9 (b). For example, if the first signal is at a fourth frequency domain position in the N frequency domain positions, it indicates that the segmentation manner 1 is used for the first information; or if the first information is at a fifth frequency domain position in the N frequency domain positions, it indicates that the segmentation manner 2 is used for the first information. For another example, if the first signal is at one frequency domain position in a first part of the N frequency domain positions, it indicates that the segmentation manner 1 is used for the first information; or if the first information is at one frequency domain position in a last part of the N frequency domain positions, it indicates that the segmentation manner 2 is used for the first information. For another example, if the first signal is first P frequency domain positions in the N frequency domain positions, it indicates that the segmentation manner 1 is used for the first information; or if the first information is at last P frequency domain positions in the N frequency domain positions, it indicates that the segmentation manner 2 is used for the first information. For another example, N is 4 and P is 2. If the first signal is at 1^{st} and 3^{rd} frequency domain positions in the four frequency domain positions, it indicates that the segmentation manner 1 is used for the first information; or if the first information is at 2^{nd} and 4^{th} frequency domain positions in the four frequency domain positions, it indicates that the segmentation manner 2 is used for the first information.

Information 2: The first information carries a system message, or the first information carries wake-up information. For example, if the first signal is at a fourth frequency domain position in the N frequency domain positions, it indicates that the first information carries a system message; or if the first information is at a fifth frequency domain position in the N frequency domain positions, it indicates that the first information carries wake-up information.

Information 3: The first information carries multicast, the first information carries broadcast, or the first information carries unicast. For example, if the first signal is at a fourth frequency domain position in the N frequency domain positions, it indicates that the first information carries multicast; if the first information is at a fifth frequency domain position in the N frequency domain positions, it indicates that the first information carries broadcast; or if the first information is at a sixth frequency domain position in the N frequency domain positions, it indicates that the first information carries unicast.

Information 4: An identifier type carried in the first information. The identifier type herein may be one or more of the following identifier types: a terminal device identifier, a group identifier of a terminal device group, a cell identity, and a tracking area identity. For example, if the first signal is at a fourth frequency domain position in the N frequency domain positions, it indicates that the first information carries a terminal device identifier; or if the first information is at a fifth frequency domain position in the N frequency domain positions, it indicates that the first information carries a group identifier of a terminal device group.

Information 5: A time offset between the first signal and the first information. The time offset herein may be a time offset from an end time position of the first signal to a start time position of first data. For example, if the first signal is at a fourth frequency domain position in the N frequency domain positions, it indicates that the time offset between the first signal and the first information is a first time offset; or if the first information is at a fifth frequency domain position in the N frequency domain positions, it indicates that the time offset between the first signal and the first information is a second time offset. The first time offset and the second time offset may be predefined in a protocol or configured by the network device. Optionally, the first time offset may be zero.

Information 6: A transport block (transport block, TB) size of the first information or an identifier quantity carried in the first information. For example, if the first signal is at a fourth frequency domain position in the N frequency domain positions, it indicates that the identifier quantity carried in the first information is a first value; or if the first information is at a fifth frequency domain position in the N frequency domain positions, it indicates that the identifier quantity carried in the first information is a second value. The first value and the second value may be predefined in a protocol or configured by the network device. Optionally, the first value may be 0.

Information 7: A manner of monitoring the first information by the terminal device, or a manner of sending the first information by the network device. Herein, a manner of monitoring the first signal by the terminal device may be a first manner or a second manner. The first manner indicates a manner of contiguously monitoring the first signal. For example, the first manner may be an always on (always on) manner or a contiguous monitoring (contiguous monitoring) manner. The second manner indicates a manner of periodically monitoring the first signal. For example, the second manner may be a duty cycle (duty cycle) manner or a periodic working manner. Correspondingly, the network device may send the first information at a specific time domain position or at a non-specific time domain position. In the first manner, the terminal device cannot predict an occasion at which the network device sends a wake-up signal. To avoid missing receiving of the wake-up signal, the terminal device needs to keep in a receiving state. Therefore, this manner needs low power consumption of the receiving state. In addition, compared with the second manner, waiting is not needed in the first manner, and the first manner has an advantage of a low delay. In the second manner, the network device and the terminal device agree on a transmission occasion of the wake-up signal, and the transmission occasion may be periodic. The network device sends no wake-up signal except the agreed occasion. In this manner, the terminal device may turn off the wake-up receiver at a time when the wake-up signal cannot appear, thereby further reducing power consumption. In this manner, power consumption of a receiving state is not needed to be very low. Because the transmission occasion of the wake-up signal is periodic, the terminal device may need to wait when receiving the wake-up signal, and a delay of receiving the wake-up signal increases.

Information 8: A behavior of the terminal device after detecting the first information, or a behavior of the network device after sending the first information. The behavior of the terminal device after detecting the first information may be as follows: The terminal device monitors paging, the terminal device monitors a paging early indication (paging early indication, PEI), or the terminal device performs random access. That the terminal device performs random access herein may alternatively be replaced with that the terminal device sends the random access preamble. Correspondingly, the behavior of the network device after sending the first information may be: sending the paging, sending the PEI, or receiving the random access of the terminal device. The receiving the random access of the terminal device herein may alternatively be replaced with receiving the random access preamble. For example, if the first signal is at a fourth frequency domain position in the N frequency domain positions, it indicates that the terminal device needs to monitor paging after detecting the first information; if the first information is at a fifth frequency domain position in the N frequency domain positions, it indicates that the terminal device needs to monitor a PEI after detecting the first information; or if the first information is at a sixth frequency domain position in the N frequency domain positions, it indicates that the terminal device needs to perform random access after detecting the first information.

Information 9: Whether the first information includes mobile terminated small data transmission (mobile terminated small data transmission, MT-SDT) indication information, a type of a mobile terminated small data transmission procedure executed by the terminal device after detecting the MT-SDT indication information, or a type of a mobile originated small data transmission (mobile originated small data transmission, MO-SDT) procedure. A small data transmission procedure means that data and/or signaling transmission is allowed when the terminal device is in an RRC_INACTIVE state or an RRC_IDLE state. The small data transmission procedure is triggered through transmission of a random access channel (random access channel, RACH) or transmission of a type 1 configuration grant (Type 1 configured grant, Type 1 CG) resource. The RACH resource is configured by using a system message, and the CG resource is configured by using dedicated signaling in an RRC release (RRCRelease) message. The RACH resource and the CG resource for small data transmission may be configured on a normal uplink (normal uplink, NUL) carrier or a secondary uplink (supplementary uplink, SUL) carrier. The RACH resource may be a 2-step (2-step) or 4-step (4-step) random access resource. The type of the mobile terminated small data transmission procedure may be a small data transmission procedure transmitted through an RACH or a small data transmission procedure transmitted by using a CG resource. The CG resource may be a Type 1 CG resource. For example, if the first signal is at a fourth frequency domain position in the N frequency domain positions, it indicates that the first information includes the MT-SDT indication information; or if the first information is at a fifth frequency domain position in the N frequency domain positions, it indicates that the first information does not include the MT-SDT indication information. For another example, if the first signal is at a fourth frequency domain position in the N frequency domain positions, it indicates that the terminal device performs, after detecting the MT-SDT indication information, the small data transmission procedure transmitted through the RACH; or if the first information is at a fifth frequency domain position in the N frequency domain positions, it indicates that the terminal device performs, after detecting the MT-SDT indication information, the small data transmission procedure transmitted by using the CG resource.

Information 10: Whether Manchester coding is used for the first information or whether a bit rate of Manchester coding is used for the first information. For example, if the first signal is at a fourth frequency domain position in the N frequency domain positions, it indicates that Manchester coding is used for the first information; or if the first information is at a fifth frequency domain position in the N frequency domain positions, it indicates that Manchester coding is not used for the first information. For example, if the first signal is at a fourth frequency domain position in the N frequency domain positions, it indicates that the bit rate of Manchester coding for the first information is a first bit rate; or if the first information is at a fifth frequency domain position in the N frequency domain positions, it indicates that the bit rate of Manchester coding for the first information is a second bit rate. The first bit rate and the second bit rate may be predefined in a protocol or configured by the network device.

Information 11: Whether channel coding is used for the first information, a type of channel coding used for the first information, or a bit rate of channel coding used for the first information. For example, if the first signal is at a fourth frequency domain position in the N frequency domain positions, it indicates that channel coding is used for the first information; or if the first information is at a fifth frequency domain position in the N frequency domain positions, it indicates that channel coding is not used for the first information.

It should be understood that the foregoing solutions are merely some examples. For how the frequency domain position of the first signal in the N frequency domain positions specifically indicates the foregoing information, refer to the embodiment in the information 1. Corresponding embodiments of other information is not described herein. In addition, for how the frequency domain position of the first signal in the N frequency domain positions specifically indicates a plurality of pieces of information in the foregoing information, the information 1 and the information 2 are used as examples herein. For example, if the first signal is at a fourth frequency domain position in the N frequency domain positions, it indicates that the segmentation manner 1 is used for the first information and the first information carries the system message; if the first information is at a fifth frequency domain position in the N frequency domain positions, it indicates that the segmentation manner 1 is used for the first information and the first information carries the wake-up information; if the first signal is at a sixth frequency domain position in the N frequency domain positions, it indicates that the segmentation manner 2 is used for the first information and the first information carries the system message; or if the first information is at a seventh frequency domain position in the N frequency domain positions, it indicates that the segmentation manner 2 is used for the first information and the first information carries the wake-up information. A combination indication embodiment of other information is similar. Details are not described herein.

FIG. 10 is a diagram of an example of a communication method according to an embodiment of this application. The method may be performed by a terminal device and a network device, or may be performed by a chip in the terminal device and a chip in the network device. It should be understood that FIG. 10 shows steps or operations of the communication method. However, these steps or operations are merely an example. In this embodiment of this application, other operations or variations of the operations in FIG. 10 may be further performed, or steps may be properly exchanged.

S 1010: The terminal device receives first indication information, and determines, based on the first indication information, whether first information carries MT-SDT indication information.

Correspondingly, the network device generates the first indication information, so that the terminal device can determine, based on the first indication information, whether the first information carries the MT-SDT indication information. The network device sends the first indication information.

The first information indicates the terminal device to enter a first state. Optionally, the first information is a wake-up signal.

Specifically, in the first state, the terminal device communicates with the network device via a main receiver; or in a second state, the terminal device receives, via a wake-up receiver, a wake-up signal sent by the network device. Optionally, the first state and the second state may correspond to different RRC states. For example, the second state may be an RRC state other than RRC_IDLE, RRC_INACTIVE, and RRC_CONNECTED. Optionally, the first state and the second state may correspond to different power states. For example, power consumption of the terminal device in the second state is lower than power consumption of the terminal device in the first state. It should be understood that, that the terminal device enters a state may be that the terminal device enters the first state or the second state based on the indication information, or may be that the terminal device switches between the first state and the second state. A specific switching operation is not limited in this application. The terminal device is in the second state when receiving the first information. The terminal device is in the first state or the second state when receiving the first indication information.

In a possible implementation, the first indication information is configured by the network device. For example, the first indication information may be a system message.

In a possible implementation, the first indication information indicates whether the first information carries the MT-SDT indication information. In a possible implementation, the first indication information may be an explicit 1-bit indication. If a value of the bit is a first value, it indicates that the first information carries the MT-SDT indication information; or if a value of the bit is a second value, it indicates that the first information does not carry the MT-SDT indication information. In a possible implementation, if the first indication information is configured, it indicates that the first information carries the MT-SDT indication information; or if the first indication information is not configured, it indicates that the first information does not carry the MT-SDT indication information.

In a possible implementation, the first indication information indicates a terminal device identifier length included in the first information. If the terminal device identifier length is greater than a preset value, the first information carries the MT-SDT indication information; or if the terminal device identifier length is less than or equal to a preset value, the first information does not carry the MT-SDT indication information.

In a possible implementation, the first indication information indicates a behavior of the terminal device after receiving the first information. If the behavior of the terminal device after receiving the first information is performing random access, the first information carries the MT-SDT indication information; or if the behavior of the terminal device after receiving the first information is monitoring a paging occasion, the first information does not carry the MT-SDT indication information.

S1020: The terminal device receives the first information.

Correspondingly, the network device sends the first information.

The foregoing solution, by carrying the MT-SDT indication information in the wake-up signal, avoids the terminal device entering a connected state to receive a downlink message, which can further reduce latency and power consumption.

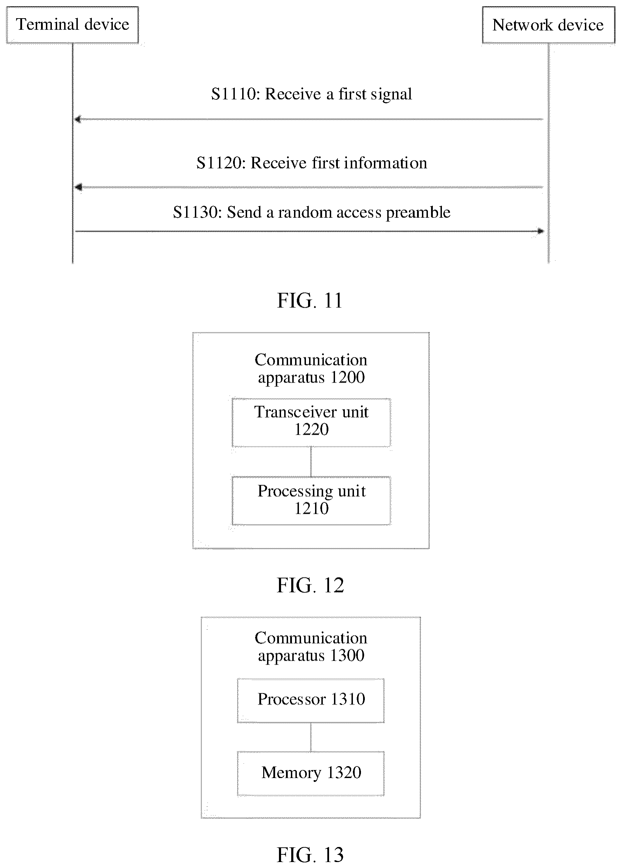

FIG. 11 is a diagram of an example of a communication method according to an embodiment of this application. The method may be performed by a terminal device and a network device, or may be performed by a chip in the terminal device and a chip in the network device. It should be understood that FIG. 11 shows steps or operations of the communication method. However, these steps or operations are merely an example. In this embodiment of this application, other operations or variations of the operations in FIG. 11 may be further performed, or steps may be properly exchanged.

S1110: The terminal device receives a first signal.

Correspondingly, the network device sends the first signal.

The first signal is used by the terminal device to perform time and/or frequency synchronization.

S1120: The terminal device receives first information.

Correspondingly, the network device sends the first information.

A modulation scheme of the first information is OOK.

It should be understood that there is no limitation on a time sequence between steps S1110 and S1120. To be specific, the network device may send the first signal before, after, or when the network device sends the first information.

In a possible implementation, a first symbol quantity is the same as a second symbol quantity. The first symbol quantity is a quantity of OOK modulation symbols included in the first signal in one OFDM symbol, and the second symbol quantity is a quantity of OOK modulation symbols included in the first information in one OFDM symbol. In a possible design, first symbol duration is the same as second symbol duration. The first symbol duration is duration occupied by one OOK modulation symbol included in the first signal in one OFDM symbol, and the second symbol duration is duration occupied by one OOK modulation symbol included in the first information in one OFDM symbol. In this way, it can be ensured that a waveform of a synchronization signal is the same as that of a data signal, and timing synchronization precision of the synchronization signal is consistent with that of the data signal.

In a possible implementation, a sequence corresponding to the first signal is a first sequence, and a quantity of bits 0 included in the first sequence is the same as a quantity of bits 1 included in the first sequence. In a possible implementation, the first sequence is the same as a sequence obtained by performing Manchester coding on a second sequence. The second sequence is a binary sequence. In a possible implementation, the second sequence is a sequence with good correlation. For example, the second sequence is a sequence found by using a computer according to a principle of minimizing peak sidelobe level, an m sequence, a gold sequence, or the like. In this way, a quantity of bits 0 and a quantity of bits 1 of the synchronization signal can be balanced, to ensure anti-noise performance of the synchronization signal.

In a possible implementation, the first signal is coded according to a first coding scheme, the first information is coded according to a second coding scheme, and the first coding scheme is different from the second coding scheme. In a possible implementation, the first coding scheme is that a bit 1 is coded as [1 0], and a bit 0 is coded as [0 1]; and the second coding scheme is that a bit 1 is coded as [0 1], and a bit 0 is coded as [1 0]. In this way, similarity between the synchronization signal and the data signal can be reduced, avoiding mistaken detection of data segments as synchronization signals.

In a possible implementation, if bandwidth occupied by the first information exceeds a first threshold, the first information is received at N frequency domain positions; or if bandwidth occupied by the first information is less than or equal to a first threshold, the first information is received at one frequency domain position. A quantity of frequency domain positions needed for transmission of the first information is adaptively determined based on a data bandwidth size, to flexibly meet requirements for power consumption and a rate. For example, when transmission of the first information is performed at one frequency domain position, a receive side needs to use only one filtering channel to receive the first information. Power consumption is low, but a supported rate is limited. When transmission of the first information is performed at a plurality of frequency positions, the receive side needs a plurality of filtering channels to receive the first information. Power consumption is high, but a higher rate can be supported.

In a possible implementation, if a data rate of the first information exceeds a second threshold, the first information is received at N frequency domain positions; or if a data rate of the first information is less than or equal to a second threshold, the first information is received at one frequency domain position. A quantity of frequency domain positions needed for transmission of the first information is adaptively determined based on a data rate value, to flexibly meet requirements for power consumption and a rate. For example, when the data rate is low, the receive side needs only one filtering channel. Power consumption is low. When the data rate is high, the receive side needs a plurality of filtering channels to receive the first information. Power consumption is higher.

In a possible implementation, if a sampling rate of the first information is less than or equal to a third threshold, a sequence corresponding to an ON symbol used to carry the first information is an all-1 sequence or a binary phase shift keying BPSK sequence; or if a sampling rate of the first information is greater than a third threshold, a sequence corresponding to an ON symbol used to carry the first information is a Zadoff-Chu sequence. The sampling rate herein is a sampling rate supported by a receiver, the terminal device, or a wake-up receiver. When the data sampling rate is low, a time domain waveform corresponding to the ON symbol is flat. This may ensure demodulation performance. When the data sampling rate is high, time domain waveform flatness corresponding to the ON symbol may be relaxed, and the Zadoff-Chu sequence is used. Power of frequency domain subcarrier is more balanced. This helps resist impact of a fading channel.

In a possible implementation, the terminal device sends first capability information. The first capability information indicates a supported sampling rate. Correspondingly, the network device receives the first capability information. In this way, the network device learns of the capability information of the terminal device.

S1130: The terminal device sends a random access preamble.

Correspondingly, the network device receives the random access preamble.

Step S1130 is an optional step.

Embodiments of the present invention may be used independently or in combination. Different steps in embodiments may also be used independently or in combination. Similar steps exist in different embodiments, and descriptions of the steps may be mutually cited and referenced.

Corresponding to the foregoing methods, embodiments of this application provide communication devices. FIG. 12 to FIG. 14 are diagrams of structures of possible communication apparatuses according to embodiments of this application. The communication apparatuses may be configured to implement functions of the terminal device or the network device in the foregoing method embodiments, and therefore can also implement the beneficial effects in the foregoing method embodiments. In embodiments of this application, the communication device may be the terminal device 101 shown in FIG. 1, the network device 102 shown in FIG. 1, or a module (for example, a chip) used in the terminal device or the network device.

As shown in FIG. 12, a communication apparatus 1200 includes a processing unit 1210 and a transceiver unit 1220. The communication apparatus 1200 is configured to implement a function of the terminal device or the network device in the method embodiment shown in FIG. 5, FIG. 10, or FIG. 11.

When the communication apparatus 1200 is configured to implement the function of the terminal device in the method embodiment shown in FIG. 5, the transceiver unit 1220 is configured to receive a first signal, where the first signal is used for time and/or frequency synchronization; and the transceiver unit 1220 is further configured to receive first information at N frequency domain positions, where a modulation scheme of the first information is on-off keying OOK, the first information is carried in the N frequency domain positions, and N is an integer greater than 1.

In a possible design, the processing unit 1210 is configured to perform the time and/or frequency synchronization based on the first signal.

In a possible design, the processing unit 1210 is further configured to demodulate the first information in the OOK scheme.

In a possible design, a first frequency domain position and a second frequency domain position are noncontiguous, and the first frequency domain position and the second frequency domain position are two adjacent frequency domain positions in the N frequency domain positions.

In a possible design, the transceiver unit 1220 is specifically configured to receive the first signal at a third frequency domain position in the N frequency domain positions. The third frequency domain position is one of the N frequency domain positions, and a sequence corresponding to the first signal at the third frequency domain position is a first sequence.

In a possible design, the frequency domain position of the third frequency domain position in the N frequency domain positions is predefined in a protocol or configured by the network device.

In a possible design, the transceiver unit 1220 is specifically configured to receive the first signal at P frequency domain positions in the N frequency domain positions, where P is an integer greater than 1 and less than or equal to N.

In a possible design, frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of monitoring the first information;
a behavior after detecting the first information;
whether the first information includes mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

In a possible design, a sequence corresponding to the first signal at the P frequency domain positions is a second sequence, and the second sequence satisfies: the second sequence is equal to a bitwise negation of the first sequence.

In a possible design, the first signal includes N sub-signals, and the N sub-signals are respectively located at the N frequency domain positions. The transceiver unit 1220 is specifically configured to receive one of the N sub-signals at each of the N frequency domain positions.

When the communication apparatus 1200 is configured to implement the function of the network device in the method embodiment shown in FIG. 5, the transceiver unit 1220 is configured to send a first signal, where the first signal is used by a terminal device to perform time and/or frequency synchronization; and the transceiver unit 1220 is further configured to send first information at N frequency domain positions, where a modulation scheme of the first information is on-off keying OOK, the first information is carried in the N frequency domain positions, and N is an integer greater than 1.

In a possible design, the processing unit 1210 is configured to modulate the first information in the OOK scheme.

In a possible design, a first frequency domain position and a second frequency domain position are noncontiguous, and the first frequency domain position and the second frequency domain position are two adjacent frequency domain positions in the N frequency domain positions.

In a possible design, the transceiver unit 1220 is specifically configured to send the first signal at a third frequency domain position in the N frequency domain positions. The third frequency domain position is one of the N frequency domain positions, and a sequence corresponding to the first signal at the third frequency domain position is a first sequence.

In a possible design, the frequency domain position of the third frequency domain position in the N frequency domain positions is predefined in a protocol or configured by the network device.

In a possible design, the transceiver unit 1220 is specifically configured to send the first signal at P frequency domain positions in the N frequency domain positions, where P is an integer greater than 1 and less than or equal to N.

In a possible design, frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of sending the first information;
a behavior after sending the first information;
whether the first information includes mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

In a possible design, a sequence corresponding to the first signal at the P frequency domain positions is a second sequence, and the second sequence satisfies: the second sequence is equal to a bitwise negation of the first sequence.

In a possible design, the first signal includes N sub-signals, and the N sub-signals are respectively located at the N frequency domain positions. The transceiver unit 1220 is specifically configured to send one of the N sub-signals at each of the N frequency domain positions.

When the communication apparatus 1200 is configured to implement the function of the terminal device in the method embodiment shown in FIG. 10, the transceiver unit 1220 is configured to receive first indication information; and the processing unit 1210 is configured to determine, based on the first indication information, whether first information carries MT-SDT indication information, where the first information indicates to enter a first state.

In a possible design, the first indication information indicates whether the first information carries the MT-SDT indication information.

In a possible design, the first indication information indicates a terminal device identifier length included in the first information. The processing unit 1210 is specifically configured to: if the terminal device identifier length is greater than a preset value, determine that the first information carries the MT-SDT indication information; or the processing unit 1210 is specifically configured to: if the terminal device identifier length is less than or equal to a preset value, determine that the first information does not carry the MT-SDT indication information.

In a possible design, the first indication information indicates a behavior of the terminal device after receiving the first information. The processing unit 1210 is specifically configured to: if the behavior of the terminal device after receiving the first information is performing random access, determine that the first information carries the MT-SDT indication information; or the processing unit 1210 is specifically configured to: if the behavior of the terminal device after receiving the first information is monitoring a paging occasion, determine that the first information does not carry the MT-SDT indication information.

When the communication apparatus 1200 is configured to implement the function of the network device in the method embodiment shown in FIG. 10, the processing unit 1210 is configured to generate first indication information, so that a terminal device can determine, based on the first indication information, whether first information carries MT-SDT indication information; and the transceiver unit 1220 is configured to send the first indication information, where the first information indicates the terminal device to enter a first state.

In a possible design, the first indication information indicates whether the first information carries the MT-SDT indication information.

In a possible design, the first indication information indicates a terminal device identifier length included in the first information. The processing unit 1210 is specifically configured to: if the terminal device identifier length is greater than a preset value, determine that the first information carries the MT-SDT indication information; or the processing unit 1210 is specifically configured to: if the terminal device identifier length is less than or equal to a preset value, determine that the first information does not carry the MT-SDT indication information.

In a possible design, the first indication information indicates a behavior of the terminal device after receiving the first information. The processing unit 1210 is specifically configured to: if the behavior of the terminal device after receiving the first information is performing random access, determine that the first information carries the MT-SDT indication information; or the processing unit 1210 is specifically configured to: if the behavior of the terminal device after receiving the first information is monitoring a paging occasion, determine that the first information does not carry the MT-SDT indication information.

When the communication apparatus 1200 is configured to implement the function of the terminal device in the method embodiment shown in FIG. 11, the transceiver unit 1220 is configured to receive a first signal and first information. The first signal is used for time synchronization and/or frequency synchronization, and a modulation scheme of the first information is on-off keying OOK.

In a possible design, the processing unit 1210 is configured to perform the time and/or frequency synchronization based on the first signal.

In a possible design, the processing unit 1210 is further configured to demodulate the first information in the OOK scheme.

In a possible design, a first symbol quantity is the same as a second symbol quantity. The first symbol quantity is a quantity of OOK modulation symbols included in the first signal in one OFDM symbol, and the second symbol quantity is a quantity of OOK modulation symbols included in the first information in one OFDM symbol.

In a possible design, first symbol duration is the same as second symbol duration. The first symbol duration is duration occupied by one OOK modulation symbol included in the first signal in one OFDM symbol, and the second symbol duration is duration occupied by one OOK modulation symbol included in the first information in one OFDM symbol.

In a possible design, a sequence corresponding to the first signal is a first sequence, and a quantity of bits 0 included in the first sequence is the same as a quantity of bits 1 included in the first sequence.

In a possible design, the first sequence is the same as a sequence obtained by performing Manchester coding on the second sequence. The second sequence is a binary sequence.

In a possible design, the processing unit 1210 is further configured to decode the first signal according to a first coding scheme; and the processing unit 1210 is further configured to decode the first information according to a second coding scheme. The first coding scheme is different from the second coding scheme.

In a possible design, the first coding scheme is that a bit 1 is coded as [1 0], and a bit 0 is coded as [0 1]; and the second coding scheme is that a bit 1 is coded as [0 1], and a bit 0 is coded as [1 0].

In a possible design, the processing unit 1210 is further configured to determine that bandwidth occupied by the first information exceeds a first threshold, and the transceiver unit 1220 is specifically configured to receive the first information at N frequency domain positions; or the processing unit 1210 is further configured to determine that bandwidth occupied by the first information is less than or equal to a first threshold, and the transceiver unit 1220 is specifically configured to receive the first information at one frequency domain position.

In a possible design, the processing unit 1210 is further configured to determine that a data rate of the first information exceeds a second threshold, and the transceiver unit 1220 is specifically configured to receive the first information at N frequency domain positions; or the processing unit 1210 is further configured to determine that a data rate of the first information is less than or equal to a second threshold, and the transceiver unit 1220 is specifically configured to receive the first information at one frequency domain position.

In a possible design, the processing unit 1210 is further configured to: if a sampling rate of the first information is less than or equal to a third threshold, determine that a sequence corresponding to an ON symbol used to carry the first information is an all-1 sequence or a binary phase shift keying BPSK sequence; or the processing unit 1210 is further configured to: if a sampling rate of the first information is greater than a third threshold, determine that a sequence corresponding to an ON symbol used to carry the first information is a Zadoff-Chu sequence.

In a possible design, the transceiver unit 1220 is further configured to send first capability information. The first capability information indicates a supported sampling rate.

When the communication apparatus 1200 is configured to implement the function of the network device in the method embodiment shown in FIG. 11, the transceiver unit 1220 is configured to send a first signal and first information. The first signal is used by a terminal device to perform time synchronization and/or frequency synchronization, and a modulation scheme of the first information is on-off keying OOK.

In a possible design, the processing unit 1210 is configured to modulate the first information in the OOK scheme.

In a possible design, a first symbol quantity is the same as a second symbol quantity. The first symbol quantity is a quantity of OOK modulation symbols included in the first signal in one OFDM symbol, and the second symbol quantity is a quantity of OOK modulation symbols included in the first information in one OFDM symbol.

In a possible design, first symbol duration is the same as second symbol duration. The first symbol duration is duration occupied by one OOK modulation symbol included in the first signal in one OFDM symbol, and the second symbol duration is duration occupied by one OOK modulation symbol included in the first information in one OFDM symbol.

In a possible design, a sequence corresponding to the first signal is a first sequence, and a quantity of bits 0 included in the first sequence is the same as a quantity of bits 1 included in the first sequence.

In a possible design, the first sequence is the same as a sequence obtained by performing Manchester coding on the second sequence. The second sequence is a binary sequence.

In a possible design, the processing unit 1210 is further configured to code the first signal according to a first coding scheme; and the processing unit 1210 is further configured to code the first information according to a second coding scheme. The first coding scheme is different from the second coding scheme.

In a possible design, the first coding scheme is that a bit 1 is coded as [1 0], and a bit 0 is coded as [0 1]; and the second coding scheme is that a bit 1 is coded as [0 1], and a bit 0 is coded as [1 0].

In a possible design, the processing unit 1210 is further configured to determine that bandwidth occupied by the first information exceeds a first threshold, and the transceiver unit 1220 is specifically configured to send the first information at N frequency domain positions; or the processing unit 1210 is further configured to determine that bandwidth occupied by the first information is less than or equal to a first threshold, and the transceiver unit 1220 is specifically configured to send the first information at one frequency domain position.

In a possible design, the processing unit 1210 is further configured to determine that a data rate of the first information exceeds a second threshold, and the transceiver unit 1220 is specifically configured to send the first information at N frequency domain positions; or the processing unit 1210 is further configured to determine that a data rate of the first information is less than or equal to a second threshold, and the transceiver unit 1220 is specifically configured to send the first information at one frequency domain position.

In a possible design, the processing unit 1210 is further configured to: if a sampling rate of the first information is less than or equal to a third threshold, determine that a sequence corresponding to an ON symbol used to carry the first information is an all-1 sequence or a binary phase shift keying BPSK sequence; or the processing unit 1210 is further configured to: if a sampling rate of the first information is greater than a third threshold, determine that a sequence corresponding to an ON symbol used to carry the first information is a Zadoff-Chu sequence.

In a possible design, the transceiver unit 1220 is further configured to receive first capability information. The first capability information indicates a sampling rate supported by the terminal device.

An embodiment of this application provides a communication apparatus 1300. FIG. 13 is a block diagram of another communication apparatus according to an embodiment of this application. The communication apparatus 1300 includes a processor 1310. The processor 1310 is coupled to at least one memory 1320. The processor 1310 is configured to read a computer program stored in the at least one memory 1320, to perform the method in any possible implementation of embodiments of this application.

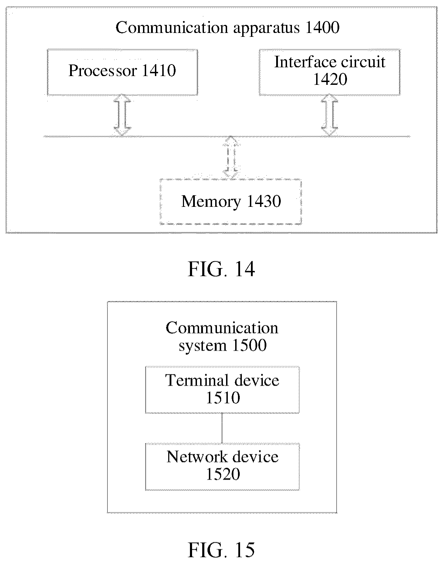

An embodiment of this application further provides a communication apparatus 1400. As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions to be executed by the processor 1410, store input data needed for running instructions by the processor 1410, or store data generated after the processor 1410 runs the instructions.

When the communication apparatus 1400 is configured to implement the method shown in FIG. 5, FIG. 10, or FIG. 11, the processor 1410 is configured to implement a function of the processing unit 1210, and the interface circuit 1420 is configured to implement a function of the transceiver unit 1220.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device. The information is sent by a network device to the terminal device. Alternatively, the chip in the terminal device sends information to another module (for example, a radio frequency module or an antenna) in the terminal device. The information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device. The information is sent by a terminal device to the network device. Alternatively, the chip in the network device sends information to another module (for example, a radio frequency module or an antenna) in the network device. The information is sent by the network device to a terminal device.

The processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application provides a communication system 1500, including a terminal device 1510 and a network device 1520 in the communication method provided in embodiments of this application. FIG. 15 is a block diagram of the communication system 1500 according to this embodiment of this application.

The method steps in embodiments of this application may be implemented by hardware, or may be implemented by a processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It may be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

It should be understood that, in this application, "when", "provided", and "if" mean that an apparatus performs corresponding processing in an objective situation, and are not intended to limit time. The terms do not mean that the apparatus is required to have a determining action during implementation, and do not mean any other limitation either.

A person skilled in the art may understand that, various numbers such as first and second in this application are merely used for differentiation for ease of description, but are not used for limiting the scope of embodiments of this application. A specific value of a number (which may also be referred to as an index), a specific value of a quantity, and a position in this application are merely used as examples, but are not unique representation forms, and are not used for limiting the scope of embodiments of this application. Various numbers such as 1^{st} and 2^{nd} in this application are merely used for differentiation for ease of description, but are not used for limiting the scope of embodiments of this application.

In addition, the term "and/or" in this application describes only an association relationship between associated objects, and indicates that three relationships may exist. For example, A and/or B may indicate the following cases: Only A exists, both A and B exist, and only B exists. In addition, the character "/" in this specification usually indicates an "or" relationship between the associated objects. The term "at least one" in this application may indicate "one" and "two or more". For example, at least one of A, B, and C may indicate the following seven cases: Only A exists, only B exists, only C exists, both A and B exist, both A and C exist, both C and B exist, and A, B, and C all exist.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

## Claims

1. A communication method, comprising:
receiving a first signal, wherein the first signal is used for time and/or frequency synchronization; and
receiving first information at N frequency domain positions, wherein
a modulation scheme of the first information is on-off keying OOK, the first information is carried in the N frequency domain positions, and N is an integer greater than 1.

2. The method according to claim 1, wherein
a first frequency domain position and a second frequency domain position are noncontiguous in frequency domain, and the first frequency domain position and the second frequency domain position are two adjacent frequency domain positions in the N frequency domain positions.

3. The method according to claim 1 or 2, wherein the receiving the first signal comprises:
receiving the first signal at a third frequency domain position in the N frequency domain positions, wherein the third frequency domain position is one of the N frequency domain positions, and a sequence corresponding to the first signal at the third frequency domain position is a first sequence.

4. The method according to claim 3, wherein
the frequency domain position of the third frequency domain position in the N frequency domain positions is predefined in a protocol or configured by a network device.

5. The method according to claim 1 or 2, wherein the receiving the first signal comprises:
receiving the first signal at P frequency domain positions in the N frequency domain positions, wherein P is an integer greater than 1 and less than or equal to N.

6. The method according to claim 3 or 5, wherein
frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of monitoring the first information;
a behavior after detecting the first information;
whether the first information comprises mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

7. The method according to claim 5 or 6, wherein
a sequence corresponding to the first signal at the P frequency domain positions is a second sequence, and the second sequence satisfies: the second sequence is equal to a bitwise negation of the first sequence.

8. The method according to claim 1 or 2, wherein the receiving the first signal comprises:
receiving one of N sub-signals at each of the N frequency domain positions, wherein the first signal comprises the N sub-signals, and the N sub-signals are respectively located at the N frequency domain positions.

9. A communication method, comprising:
sending a first signal, wherein the first signal is used by a terminal device to perform time and/or frequency synchronization; and
sending first information at the N frequency domain positions, wherein
a modulation scheme of the first information is on-off keying OOK, the first information is carried in the N frequency domain positions, and N is an integer greater than 1.

10. The method according to claim 9, wherein
a first frequency domain position and a second frequency domain position are noncontiguous in frequency domain, and the first frequency domain position and the second frequency domain position are two adjacent frequency domain positions in the N frequency domain positions.

11. The method according to claim 9 or 10, wherein the sending the first signal comprises:
sending the first signal at a third frequency domain position in the N frequency domain positions, wherein the third frequency domain position is one of the N frequency domain positions, and a sequence corresponding to the first signal at the third frequency domain position is a first sequence.

12. The method according to claim 11, wherein
the frequency domain position of the third frequency domain position in the N frequency domain positions is predefined in a protocol or configured by a network device.

13. The method according to claim 9 or 10, wherein the sending the first signal comprises:
sending the first signal at P frequency domain positions in the N frequency domain positions, wherein P is an integer greater than 1 and less than or equal to N.

14. The method according to claim 11 or 13, wherein
frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of sending the first information;
a behavior after sending the first information;
whether the first information comprises mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

15. The method according to claim 13 or 14, wherein
a sequence corresponding to the first signal at the P frequency domain positions is a second sequence, and the second sequence satisfies: the second sequence is equal to a bitwise negation of the first sequence.

16. The method according to claim 9 or 10, wherein sending the first signal comprises:
sending one of N sub-signals at each of the N frequency domain positions, wherein the first signal comprises the N sub-signals, and the N sub-signals are respectively located at the N frequency domain positions.

17. A communication apparatus, comprising:
a transceiver unit, configured to receive a first signal, wherein the first signal is used for time and/or frequency synchronization, wherein
the transceiver unit is further configured to receive first information at the N frequency domain positions, wherein
a modulation scheme of the first information is on-off keying OOK, the first information is carried in the N frequency domain positions, and N is an integer greater than 1.

18. The apparatus according to claim 17, wherein
a first frequency domain position and a second frequency domain position are noncontiguous in frequency domain, and the first frequency domain position and the second frequency domain position are two adjacent frequency domain positions in the N frequency domain positions.

19. The apparatus according to claim 17 or 18, wherein
the transceiver unit is specifically configured to receive the first signal at a third frequency domain position in the N frequency domain positions, wherein the third frequency domain position is one of the N frequency domain positions, and a sequence corresponding to the first signal at the third frequency domain position is a first sequence.

20. The apparatus according to claim 19, wherein
the frequency domain position of the third frequency domain position in the N frequency domain positions is predefined in a protocol or configured by a network device.

21. The apparatus according to claim 17 or 18, wherein
the transceiver unit is specifically configured to receive the first signal at P frequency domain positions in the N frequency domain positions, wherein P is an integer greater than 1 and less than or equal to N.

22. The apparatus according to claim 19 or 21, wherein
frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of monitoring the first information;
a behavior after detecting the first information;
whether the first information comprises mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

23. The apparatus according to claim 21 or 22, wherein
a sequence corresponding to the first signal at the P frequency domain positions is a second sequence, and the second sequence satisfies: the second sequence is equal to a bitwise negation of the first sequence.

24. The apparatus according to claim 17 or 18, wherein
the first signal comprises N sub-signals, and the N sub-signals are respectively located at the N frequency domain positions; and
the transceiver unit is specifically configured to receive one of the N sub-signals at each of the N frequency domain positions.

25. A communication apparatus, comprising:
a transceiver unit, configured to send a first signal, wherein the first signal is used by a terminal device to perform time and/or frequency synchronization, wherein
the transceiver unit is further configured to send first information at the N frequency domain positions, wherein
a modulation scheme of the first information is on-off keying OOK, the first information is carried in the N frequency domain positions, and N is an integer greater than 1.

26. The apparatus according to claim 25, wherein
a first frequency domain position and a second frequency domain position are noncontiguous in frequency domain, and the first frequency domain position and the second frequency domain position are two adjacent frequency domain positions in the N frequency domain positions.

27. The apparatus according to claim 25 or 26, wherein
the transceiver unit is specifically configured to send the first signal at a third frequency domain position in the N frequency domain positions, wherein the third frequency domain position is one of the N frequency domain positions, and a sequence corresponding to the first signal at the third frequency domain position is a first sequence.

28. The apparatus according to claim 27, wherein
the frequency domain position of the third frequency domain position in the N frequency domain positions is predefined in a protocol or configured by a network device.

29. The apparatus according to claim 25 or 26, wherein
the transceiver unit is specifically configured to send the first signal at P frequency domain positions in the N frequency domain positions, wherein P is an integer greater than 1 and less than or equal to N.

30. The apparatus according to claim 27 or 29, wherein
frequency domain resource position information of the first signal in the N frequency domain positions indicates at least one of the following information:
a segmentation manner of the first information at the N frequency domain positions;
the first information carries a system message or the first information carries wake-up information;
the first information carries multicast, the first information carries broadcast, or the first information carries unicast;
an identifier type carried in the first information;
a time offset between the first signal and the first information;
a transport block TB size of the first information or an identifier quantity carried in the first information;
a manner of sending the first information;
a behavior after sending the first information;
whether the first information comprises mobile terminated small data transmission MT-SDT indication information;
whether Manchester coding is used for the first information or whether a bit rate of Manchester coding is used for the first information; and
whether channel coding is used for the first information, a type of channel coding used for the first information, or a bit rate of channel coding used for the first information.

31. The apparatus according to claim 29 or 30, wherein
a sequence corresponding to the first signal at the P frequency domain positions is a second sequence, and the second sequence satisfies: the second sequence is equal to a bitwise negation of the first sequence.

32. The apparatus according to claim 25 or 26, wherein
the first signal comprises N sub-signals, and the N sub-signals are respectively located at the N frequency domain positions; and
the transceiver unit is specifically configured to send one of the N sub-signals at each of the N frequency domain positions.

33. A communication apparatus, comprising at least one processor and an interface circuit, wherein the interface circuit is configured to provide an input or an output of instructions and/or data for the at least one processor; and when the at least one processor executes the instructions, the apparatus is caused to implement the method according to any one of claims 1 to 16.

34. A computer-readable storage medium, comprising instructions, wherein when the instructions are run on a computer, the computer is caused to perform the method according to any one of claims 1 to 8, or the computer is caused to perform the method according to any one of claims 9 to 16.

35. A computer program product, comprising instructions, wherein when the instructions are run on a computer, the computer is caused to perform the method according to any one of claims 1 to 8, or the computer is caused to perform the method according to any one of claims 9 to 16.

36. A chip, comprising a processor and a communication interface, wherein the processor is configured to read instructions or a computer program, to perform the method according to any one of claims 1 to 8, or cause the computer to perform the method according to any one of claims 9 to 16.

37. A communication system, comprising the communication apparatus according to any one of claims 17 to 24 and the communication apparatus according to any one of claims 25 to 32.
